# EUROPEAN PATENT APPLICATION

(11) **EP 4 653 821 A1**
(43) Date of publication of application: **26.11.2025**
(21) Application number: 24305810.4
(22) Date of filing: 23.05.2024
(51) Int. Cl.: G01D 11/24, G01L 19/14

(54) **SENSOR ASSEMBLY**

(71) Applicant: TE Connectivity Sensors France, 31027 Toulouse Cedex 3 (FR)
(72) Inventor: Gayrard, Fabien, Toulouse (FR); Vidal, Yannick, Toulouse (FR); Payzal, Sylvain, Toulouse (FR); Simphor, Cedric, Toulouse (FR)
(74) Representative: Grünecker Patent- und Rechtsanwälte PartG mbB

(57) **Abstract**

The invention relates to a sensor assembly for the sensing of a physical property, in particular humidity and/or pressure and/or temperature, in a first environment. The sensor assembly comprises a sensor mounting body (103, 503), a sensing means (105) for sensing the physical property, and a plurality of electrical connection pins (107, 107a, 107b, 207, 307). The sensor mounting body (103, 503) comprises a first side (113) for interfacing the first environment (101).The sensing means (105) is arranged over the first side (113), wherein the sensing means (105) comprises an integrated circuit (IC) sensor chip and a package (127) for the IC sensor chip. Each of the plurality of electrical connection pins (107, 107a, 107b, 207, 307) extends through the sensor mounting body (103, 503) from the first side (113) to a second side (115) of the sensor mounting body (103, 503). A passage (129, 129a, 129b, 529) of each one of the electrical connection pins (107, 107a, 107b, 207, 307) through the sensor mounting body (103, 503) is sealed by a sealing portion (131, 131a, 131b, 531) made of a sealing material. Each one of the electrical connection pins (107, 107a, 107b, 207, 307) is directly attached to the package (127) of the sensing means (105).

## Description

The present invention relates to a sensor assembly for the sensing of a physical property, in particular humidity and/or pressure and/or temperature, in a first environment.

It is known to implement sensing means for the sensing of physical properties in a given environment. In some particular harsh environments, for example high pressure environments, high temperature environments, high vibration environments, liquid-immersed environments or high volumetric flux environments, some electronic portions of the sensing means required for data processing and/or signalling may be insufficiently durable. In these cases, it is typical to leave only the sensing element sensitive to the physical property in the given environment while removing the electronic portions towards a different, less challenging environment. For example, US 2015/241293 A1 discloses a pressure sensor having a front seal, in which only a stand-alone pressure sensing element is provided in the environment to be sensed.

This separation of electronic portions and sensing portions of the sensing means increases manufacturing complexity and reduces sensing quality due to additional disturbance factors.

It is therefore an object of the present invention to provide an improved sensing solution for the sensing of a harsh environment, in particular having improved accuracy and reduced manufacturing costs.

This object is achieved with a sensor assembly for the sensing of a physical property, in particular humidity and/or pressure and/or temperature, in a first environment, as defined in claim 1. The sensor assembly comprises a sensor mounting body, a sensing means for sensing the physical property, and a plurality of electrical connection pins. The sensor mounting body comprises a first side for interfacing the first environment The sensing means is arranged over the first side. The sensing means comprises an integrated circuit (IC) sensor chip and a package for the IC sensor chip. Each one of the electrical connection pins extends through the sensor mounting body from the first side to a second side of the sensor mounting body. A passage of each one of the electrical connection pins through the sensor mounting body is sealed by a sealing portion made of a sealing material. Each one of the electrical connection pins is directly attached to the package of the sensing means.

The sensor assembly of the invention allows for an arrangement of an IC sensor chip in the first environment, and thus provides more cost-efficient solution for sensing harsh environments while at the same time providing increased accuracy. In particular, the direct attachment of the package of the sensing means to the electrical connection pins, without interconnecting a printed circuit board or other intermediary connection devices, assures manufacturing cost-efficiency while also reducing the exposure to the harsh environment to be sensed. At the same time, the sealing portions that seal the passage of the electrical connection pins can guarantee the sealing performance of the sensor assembly when mounted in the first environment.

In some aspects, the sensing means, in particular the package, can be attached to the sensor mounting body only via the direct attachment to each one of the electrical connection pins. This provides a particularly lean and quickly manufactured sensing solution.

In some aspects, the sensing means, in particular the package, can be attached to the sensor mounting body via a support structure interposed between the package and the sensor mounting body. The structural, that is, mechanical, attachment of the sensing means is thus reinforced, providing greater resistance to vibrations than absent said support structure. In addition, advantageously, the support structure can be positioned in contact with a thermal pad of the package of the sensing means, thus serving as heat sink.

In some aspects, the first environment can be a liquid-immersed environment, such as an oil-immersed environment, for example a braking-oil-immersed environment. In some aspects, the first environment can be an environment having an ambient pressure of more than 100 kPA (1 bar), in particular more than 1 MPa (10 bar), preferably more than 5 MPa (50 bar), wherein the package is suitable for the first environment. In some aspects, the first environment can be an environment having an ambient temperature of more than 100°C, in particular more than 120°C, preferably more than 140°C. An IC sensor chip can provide increased sensing accuracy and durability for these harsh environments.

In some aspects, the package can be a flat no-leads package, preferably a dual flat no-leads (DFN) or a quad flat no-leads (QFN) package. Such a package can be particularly suited to be sensing in hard environments, because the lead frame connections to the IC sensor chip are more protected and durable than some contact arrangements of alternative IC package types.

In some aspects, each one of the plurality of connection pins can comprise a pin termination, in particular a flat pin termination or a bent pin termination or a step-shaped pin termination. A flat pin termination can be more provide swift and stable assembly. A bent pin termination can be less damaging for IC sensor chip package contact tabs. A step-shaped pin termination can facilitate a press-fitting assembly of an IC sensor chip package with electrical connection pins, in particular a manual press-fitting assembly.

In some aspects, the package, in particular a lead frame of the package, can be attached directly to each one of the pin terminations such that an electrical connection with the IC sensor chip is realized. Thus, a further electronic component can communicate with the IC sensor chip via the electrical connection pins.

In some aspects, each one of the pin terminations can comprise a soldered portion or a welded portion attached to the package, in particular attached to a respective contact tab of the package. The package can be attached to the pin terminations, in particular the soldered portions or welded portions, by a soldering or a welding. A soldering or welding provides greater resistance to vibrations and a lower electrical contact resistance for the electrical connection between electrical connection pins and the sensing means.

In some aspects, the package can be attached to the pin terminations by a press-fitting. A press-fitting provides speedier and/or more cost-efficient manufacturing than soldering or welding.

In some aspects, the sensor mounting body can comprise, in particular can be made of, a metal, preferably a stainless steel. In some aspects, the sealing material can be material different from the material of the sensor mounting body. In some aspects, the sealing material can comprise or be made of an inorganic material, in particular a ceramic, preferably glass. Glass can offer a good sealing performance required for harsh environments, in particular when sealed to a metal sensor mounting body. In some aspects, the sealing material can comprise or be made of an organic polymer, preferably an epoxy or a polyphenylene sulphide (PPS) or a polyether urethane. These may offer sufficient sealing performance while being more cost-efficient to implement than ceramic sealing materials, in particular glass.

In some aspects, the sensor mounting body can be configured to be mounted in a passageway between the first environment and a second environment, thereby sealing the passageway. Thus, the sensor assembly allow the installation of the sensing means in the first environment while at the same time allowing access thereto from a different, second environment, for example from an ambient environment external to the first environment.

In some aspects, the sensor mounting body can comprise an externally threaded portion and the sensor mounting body can be configured to be screwed into the passageway via the externally threaded portion. A screwing provides sealing while at the same time being reversible, providing improved maintenance and reparation performance.

In some aspects, the plurality of connection pins can comprise at least three, in particular at least four, preferably exactly four, connection pins. Three electrical pins can be sufficient for a controlling of the IC sensor chip. Four electrical pins are particularly suited for electrical connection with the IC sensor chip, for example by assigning two electrical connection pins to a signalling and two electrical connection pins to a powering.

In some aspects, the passage of each one of the connection pins through the sensor mounting body can be sealed by a respective sealing portion made of the sealing material. Thus, the amount of sealing material required is reduced, also lowering manufacturing costs.

In some aspects, the passage of each one of the connection pins through the sensor mounting body can be sealed by a single contiguous sealing portion made of the sealing material. This configuration may require fewer manufacturing steps and may thus be less prone for sealing deficiencies.

In some aspects, the sealing portion can extend beyond the sensor mounting body to at least partially, preferably entirely, envelop the package. This configuration further enhances robustness of the sensor assembly, and thus extends sensor assembly lifetime.

The above-described aspects, objects, features and advantages of the present invention will be more completely understood and appreciated by careful study of the following more detailed description of a presently preferred exemplary embodiment of the invention, taken in conjunction with accompanying drawings, in which:
Figure 1 illustrates a sensor assembly according to a first embodiment of the invention.
Figure 2 illustrates a view of an attachment of a package for an IC sensor according to a variant of the first embodiment.
Figure 3 illustrates a view of an attachment of a package for an IC sensor according to a variant of the first embodiment.
Figure 4 illustrates a sensor assembly according to a second embodiment of the invention.
Figure 5 illustrates a sensor assembly according to a third embodiment of the invention.

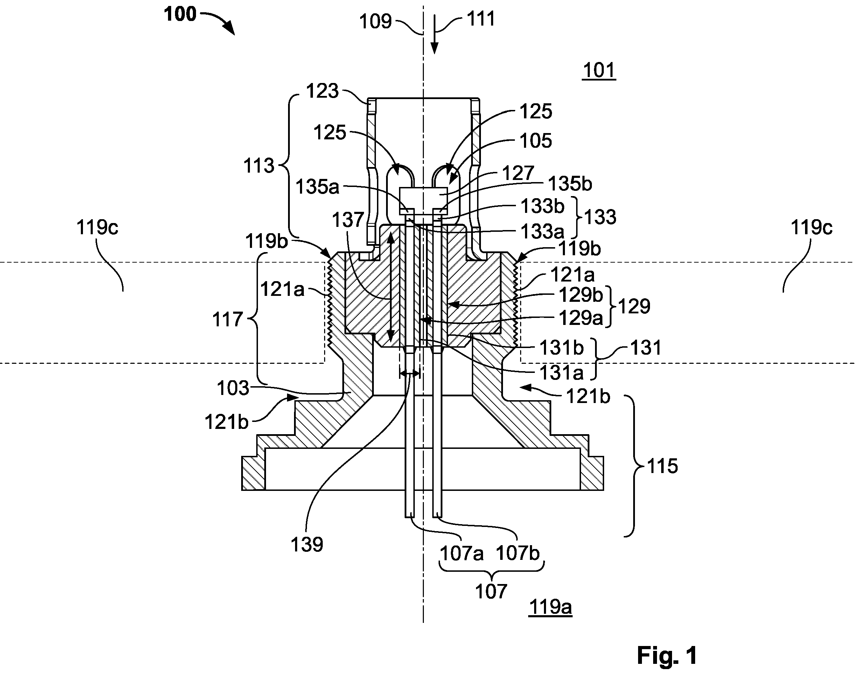

Unless explicitly described otherwise, the structural features of the objects illustrated in Figures 1 to 5 are not drawn to scale, neither individually with respect to their Cartesian dimensions, nor with respect to each other along one Cartesian direction. Further, identical reference signs used repeatedly in the different figures relate to identical elements.

The technical features and their associated advantages or effects described in the following can be combined with or adapted to any aspects or embodiments of the invention, together or independently, yielding further possible embodiments or aspects of the invention.

Figure 1 shows a cut view of a sensor assembly according to a first embodiment of the invention. The sensor assembly 100 shown on Figure 1 is a sensor assembly for the sensing of a physical property, in particular humidity and/or pressure and/or temperature, of a first environment 101. The sensor assembly comprises a sensor mounting body 103, a sensing means 105 for the sensing of the physical property in the first environment 101, and a plurality of electrical connection pins 107. Specifically, the sensor assembly 100 comprises four electrical connection pins 107, only two of which 107a, 107b, are visible on the cut view of Figure 1.

In the present embodiment, the sensor mounting body 103 is substantially rotationally symmetrical with respect to a central axis 109. Along an extension direction 111 coaxial with the central axis 109, the sensor mounting body 103 comprises a first side 113, a second side 115 and an intermediary part 117. The intermediary part 117 is interposed between and mechanically connects the first side 113 and the second side 115 such that the first side 113 is opposed to the second side 115 with respect to the intermediary part 117.

The first side 113 is configured to interface with the first environment 101 and the second side 115 is configured to interface with a second environment 119a different from the first environment 101.The sensor mounting body 103 is configured to be mounted in a passageway 119b or opening between the first environment 101 and the second environment 119a. For example, the first environment 101 is an environment to be sensed, and the second environment 119a is an ambient environment, and the passageway 119b is a hole in an inner wall 119c separating the first environment 101 and the second environment 119a.

Specifically, here, the intermediary part 117 comprises an externally threaded portion 121. Thus, the sensor mounting body 103 is configured to be screwed into said passageway 119b, for example wherein the passageway 119b is configured as a nut and/or comprises an internal thread matching the externally threaded portion 121. Specifically, the sensor mounting body 103 can be configured to seal the passageway 119b, in particular when screwed into said passageway119b. Optionally, the sensor mounting body 103 can further comprise a groove 121b for the positioning of a sealing joint such as an O-ring.

In the present embodiment, the first environment 101 can be a liquid-immersed environment, for example a braking-oil-immersed environment. However, the sensor assembly 100 is also suited for a sensing in other environments, in particular harsh environments, such as high-pressure environments and/or high-temperature environments. A high-pressure environment can be an environment having an ambient pressure of more than 100 kPa (1 bar), or more than 1 MPa (10 bar), or more than 1,5 MPa (15 bar), or more than 2 MPa (20 bar), or more than 2,5 MPa (25 bar), or more than 3 MPa (30 bar), or more than 5 MPa (50 bar), or more than 6 MPa (60 bar). A high-temperature environment can be an environment having an ambient temperature of more than 100°C or more than 120°C or more than 140°C.

The sensor mounting body 103 comprises a metal, specifically here a stainless steel. In particular, the entire sensor mounting body 103 can be made of the metal, specifically the stainless steel. For example, the sensor mounting body 103 can be monolithically moulded from stainless steel.

In some variants, the sensor mounting body can instead comprise a main body made of a glass-fibre-reinforced polybutylene terephthalate (PBT) or a glass-fibre-reinforced polyamide (PA), for example PBT-GF30 or PA-66-GF30, and the externally threaded portion can be an over-moulded machined threaded screw.

The sensing means 105 is arranged over the first side 113 of the sensor mounting body 103. Specifically, the first side 113 of the sensor mounting body 103 comprises a shroud 123, the shroud 123 extending tubularly around the central axis 109 in a direction opposed to the extension direction 111 to envelop the sensing means 105. The shroud 123 comprises a plurality of through-holes 125. The through-holes 125 facilitate an interfacing, that is, a direct contact, of the sensing means 105 with the first environment 101. At the same time, the shroud 123 protects the sensing means 105 from high volumetric flux in the environmental fluid, for example collision with large particles, or from mechanical shocks, for example from accidental handling.

The sensing means 105 comprises an integrated circuit (IC) sensor chip, not visible on Figure 1, and a package 127 for the IC sensor chip. Here, the IC sensor chip is an application-specific integrated circuit (ASIC) comprising a sensing layer that is sensitive to changes in the physical property of the first environment 101 to be sensed. For example, the sensing layer may be sensitive to humidity, that is, moisture. Thus, in an example where the first environment 101 is a braking-oil-immersed environment, the sensing means 105 may be configured for sensing the water content in the braking oil. The package 127 packs, that is holds, the IC sensor chip. In particular, the package 127 encapsulates the IC sensor chip such that said sensor chip is protected from damaging environmental disturbances, but without preventing or interfering with the sensing of the physical property or with an outward signalling, for example via the electrical connection pins 107.

As shown on Figure 1, the electrical connection pins 107 extend through the sensor mounting body 103, in particular through the intermediary part 117. The electrical connection pins 107 extend from the first environment 101 to the second environment 119a along the extension direction 111, preferably in parallel to the central axis 109. Specifically, each one of the electrical connection pins 107 extends through a respective passage 129 formed in the sensor mounting body 103. In the cut view of Figure 1, only the passages 129a, 129b for the electrical connection pins 107a, 107b are visible. The electrical connection pin 107a extends through the passage 129a, and the electrical connection pin 107b extends through the passage 129b. The respective passages 129a, 129b therefore also extend along the extension direction 111 and in parallel to the central axis 109.

The passage 129 of each one of the electrical connection pins 107 through the sensor mounting body 103 is sealed by a respective sealing portion 131. For example, in the cut view of Figure 1, the passage 129a for the electrical connection pin 107a is sealed by the sealing portion 131a, and the passage 129b for the electrical connection pin 107b is sealed by the respective sealing portion 131b.

The respective sealing portions 131 can comprise a sealing material configured to fill remaining space in the passages 129 holding respective electrical connection pins 109, in particular to entirely and durably fill said space. For example, the respective sealing portions 131 can be entirely made of said sealing material for increased sealing performance. Here, the respective sealing portions 131 are made of a glass. Preferably, the glass sealing portions 131 are bonded to the metallic sensor mounting body 103 and to the electrical connection pins 107 by a glass-to-metal bonding process. Thus, the sensor mounting body 103 can be realised as a glass-to-metal (GTM) screw.

In alternative embodiments, in particular in the embodiments in which the importance of cost outweighs the importance of sealing performance, the sealing portions 131a, 131b can, instead of glass, comprise and/or be made of a different ceramic than the glass. Alternatively, the sealing portions 131a, 131b can also comprise and/or be made of an organic polymer, for example an epoxy or a polyether urethane or a polyphenylene sulphide (PPS).

Figure 1 shows that in the sensor assembly 100 of the first embodiment, the sensing means 105 is attached directly to the electrical connection pins 107. Specifically, the package 127 is directly soldered to the electrical connection pins 107. More specifically, each one of the electrical connection pins 107 comprises a pin termination 133, and each pin termination 133 is soldered to a contact pad 135 of the package 127 configured for signalling and/or powering with the IC sensor ship held in the package 127.

As shown on Figure 1, the electrical connection pin 107a comprises the pin termination 133a soldered to a contact tab 135a of the package 127, and the electrical connection pin 107b comprises the pin termination 133b soldered to the contact tab 135b of the package 127. In some variants, the pin termination is 133 may be welded to the contact tab 135, instead of soldered.

According to the first embodiment of the invention, the sensing means 105, specifically the package 127, is attached to the sensor mounting body 103 only via the plurality of electrical connection pins 107. That is, the electrical connection pins 107 soldered to the package 127 are the only mechanical link and/or structural attachment between the sensing means 105 and the sensor mounting body 103. This configuration further reduces the number of the separate parts and manufacturing steps required for the sensor assembly, and thus reduces the risk of signalling interference and/or manufacturing defects.

The electrical connection pins 107 establish an electrical signalling with and/or an electrical powering of the IC sensor chip comprised in the package 127 of the sensing means 105, once connected with a further electrical component. Specifically, the electrical connection pins 107 realise an electrical connection between the sensing means 105 arranged over the first side 113 of the sensor mounting body 101, and a further electrical component arranged in or over the second side 115 of the sensor mounting body 101.

The further electrical component, not shown on Figure 1, can be a control unit, a processor unit and/or an antenna. The further electrical component is configured to control and/or process data and/or store data of the IC sensor chip of the sensing means 105. Preferably, the further electrical component comprises a printed circuit board (PCB) comprising one or more processors, and/or one or more antennas, and/or an electrical connecting structure configured to mate with an electrical connector. In some variants, the further electrical component can for example only be electrical connecting structure configured to be mated to and unmated from a dedicated counter-connector for wiring the IC sensor chip to a desired location. In some variants, the further electrical component may be an Internet-of-Things (IoT) wireless system, preferably a LoRa wireless system or a BLE wireless system.

The electrical connection pins 107 can be made of a nickel-iron alloy, here an Invar-type nickel-iron alloy for similarity of thermal expansion coefficient (CTE), thus offering improved thermal expansion synergy with the glass sealing portions 131. In variants, the electrical connection pins 107 can also be made of a nickel-cobalt alloys such as Kovar, or of a tin alloy, or of a brass alloy.

The electrical connection pins 107 can be cylindrically shaped and metal plated. In particular, the pin terminations 133 can comprise a metal plating to reduce corrosion. Preferably, the metal plating of the electrical connection pins 107 and in particular of the pin terminations 133 comprises a first plating layer nickel directly on the Invar connection pins 107, and then additionally a second plating layer of gold on top of the nickel layer for improved soldering-related anti-corrosion performance. In some variants, the electrical connection pins can be cuboid (instead of cylindrical) to prevent torsion of the pins prior to the sealing of the passages.

The sealed passages 129 through which the electrical connection pins 107 extend, can each have a same length 137, that is, the extension along the extension direction 111, and a same diameter 139 that is, the extension along a direction orthogonal to the extension direction 111. The length 137 of the sealed passages 129 can be greater than five times, preferably greater than 10 times, the diameter 139 of the sealed passages 129. In this configuration, the sealing performance of the sensor assembly 100 is improved compared to shorter lengths 139, while at the same time the second environment 119a is securely sealed from the first environment 101.

The package 127 of the sensing means 105 can be a flat-no-leads-type package for integrated circuits, also known as micro-lead-frame-type package or small-outline-no-leads-type package. In this case, the package 127 does not comprise any externally protruding lead contacts for contacting the packed integrated circuit. In detail, the package 127 is preferably a dual-flat-no-leads (DFN) package, or alternatively a quad-flat-no-leads (QF and) package. These package types can provide satisfactory durability even in harsh environments. However, in some variants, alternative package types could be suitable for the sensing means 105, for example a Flip-Chip-type or a land-grid-array (LGA)-type package.

According to the first embodiment of the invention, each pin termination 133 for the attachment to a contact tab 135 of the sensing means 105 is flat. That is, each pin 107 is sectioned so as to provide diametrically flat, that is orthogonal with respect to the extension direction 111, pin termination 133. The flat terminations 133 of the first embodiment can provide a plane and thus more stable positioning plane for the sensing means 105 during the manufacturing.

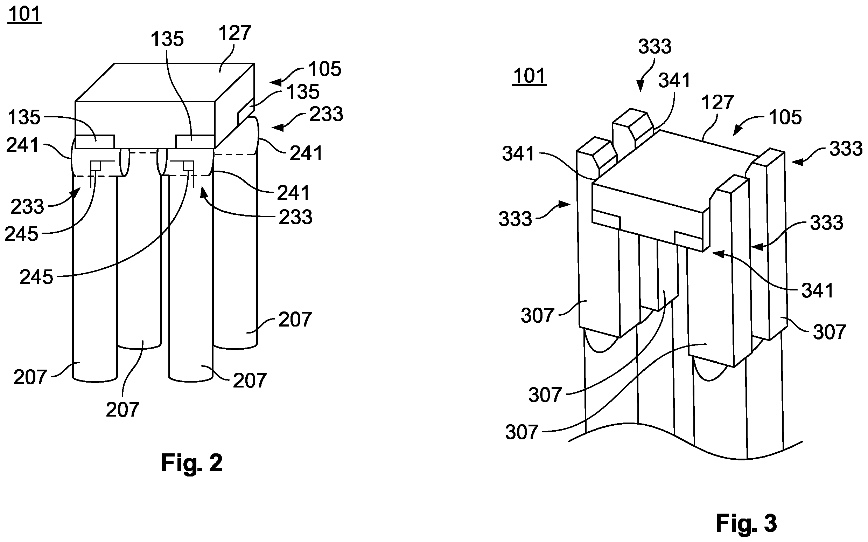

Figure 2 shows an attachment of a sensing means 105 according to a variant of the first embodiment. According to the variant of Figure 2, the electrical connection pins 207 of the corresponding sensor assembly comprise different pin terminations 233. The pin terminations 233 are not flat and/or diametrically sectioned, but instead comprise a bending 241. That is the pin terminations 233 are bent with respect to the extension direction 111. Preferably, each one of the bent pin terminations 233 is bent to an angle 245 between 80° and 100°, preferably 90°. In a variant, the bent pin terminations 233 are bent inwardly with respect to each other, in particular so as to point towards a common central point. This configuration of pin terminations 233, with respect to the flat pin termination 133 configuration, may provide more surface for the soldering and also, due to less angular edges, risk less chafing during positioning and manufacturing.

Figure 3 shows an attachment of a sensing means 105 according to another variant of the first embodiment. According to the variant of Figure 3, the electrical connection pins 307 of the corresponding sensor assembly comprise alternative pin terminations 333. Here, each pin termination 333 comprises a step shape 341. That is, a step-shape 341 is machined into an extremity of each respective electrical connection pin 307. Here, the step shape 341 is substantially L-shaped and configured to provide a mechanical support for the package 127.

According to the variant of Figure 3, the electrical connection pins 307 can be attached to the package 127 by a press-fitting arrangement. The electrical connection pins 307 each comprise respective step shapes 341 and are positioned with respect to each other so as to enable a press-fitting attachment, that is, a friction-fit, of the package 127 thereto when the package 127 is pressed in the extension direction 111 into the slot formed by the four step-shaped 341 pin terminations 333. Optionally, the press-fit package 127 can additionally be soldered to the pin terminations 333, and the step-shaped 341 pin terminations 333 allow for faster and more convenient soldering by virtue of their centring and supporting function.

This variant provides the advantage of eliminating manufacturing steps that can be aggressive on the electrical connection pins 107, such as soldering or welding and also avoids possible contamination of the sensor assembly 100's functions from bonding material.

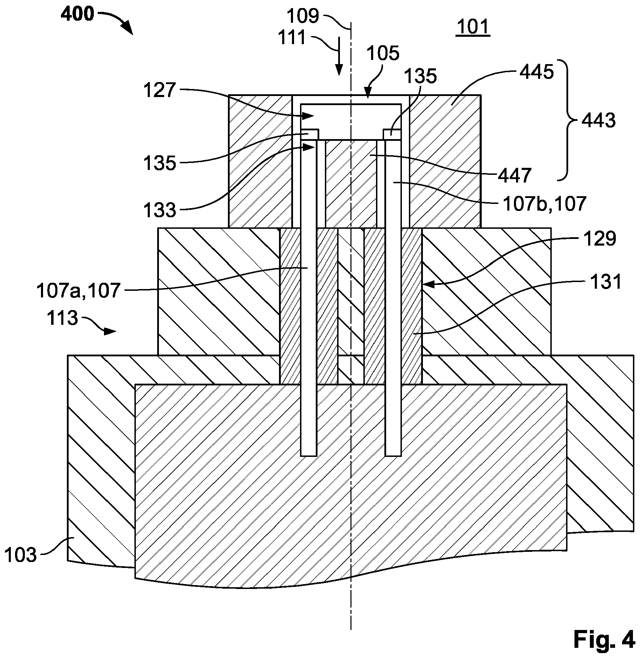

Figure 4 shows a partial view of a sensor assembly 400 according to a second embodiment of the invention. The sensor assembly 400 of the second embodiment differs from the sensor assembly 100 of the first embodiment in that it further comprises a support unit 443. The support unit 443 comprises a support casing 445 and a pillar-shaped support structure 447. The support casing 445 is can be a plastic shroud surrounding the sensing means 105 and protects the sensing means 105 from external damage, in an analogous fashion to the shroud 123 of the first embodiment.

The support structure 447 is preferably made from the same material as the support casing 445 and is arranged centrally on the sensor mounting body 103, protruding along the central axis towards the first side 113. Specifically, the support structure 447 is interposed between the sensing means 105, in particular the package 127, and the sensor mounting body 103. The support structure 447 serves as further additional mechanical support for the sensing means 105, in particular prior to an attachment to the electrical connection pins 107, thus reducing mechanical strain on said electrical connection pins 107. In addition, the support structure 447 can be shaped to provide a centering function for the package 127 prior to attachment to the electrical connection pins 107.

In one variant of the second embodiment, the support structure 447 can comprise an attachment means for the attachment with the sensing means 105. The attachment of the sensing means 105 to the support structure 447 can thus complement and reinforce the attachment of the sensing means 105 to the electrical connection pins 107.

In a further variant of the second embodiment, the support structure 447 can be configured as a heatsink. For example, when the package 127 of the sensing means 105 comprises an exposed thermal pad for facilitating heat exchange of the IC sensor ship held in the package 127, the support structure 447 can be arranged to be in direct contact with said thermal pad. In this variant, the support structure 447 is preferably formed from a metal, preferably the same metal as said thermal pad. Thus, the heat diffusion of the sensing means 105 can be improved.

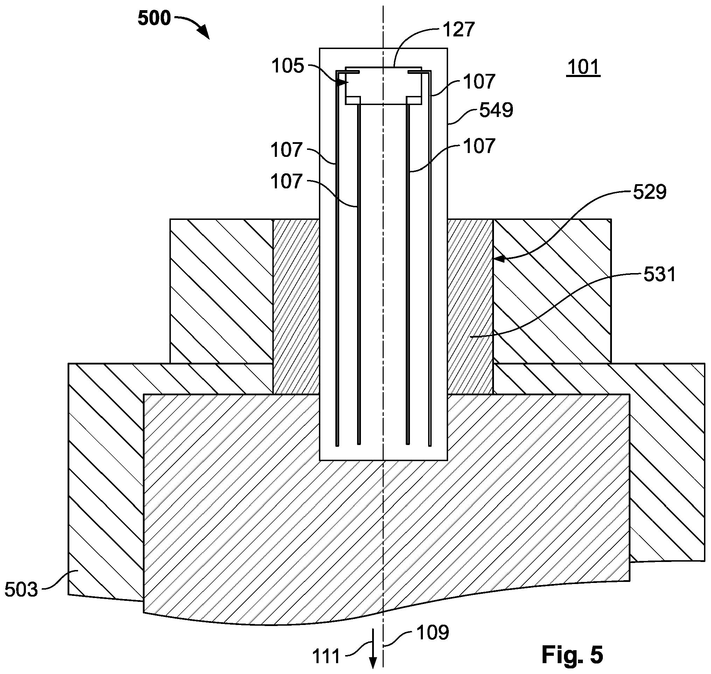

Figure 5 shows a partial view of a sensor assembly 500 according to a third embodiment of the invention. The sensor assembly 500 differs from the sensor assembly of the first embodiment in that the sensing means 105 and the four electrical connection pins 107 to which the sensing means 105, in particular the package 127, are attached for establishing electrical connection, are enclosed in a sealing substrate 549. The sealing substrate 549, comprising the four electrical connection pins 107 and the sensing means 105, is arranged in an enlarged passage 529, extending coaxially along the central axis 109. Thus, the substrate extends 549 extends beyond the sensor mounting body 503, still enveloping the entire sensing means 105.

The enlarged passage 529 is sealed by a sealing portion 531 made from a sealing material different from the material of the sensor mounting body 503. For example, as known from the first embodiment, the sensor mounting body 503 comprising a single enlarged passage 529 can be made of steel, and the sealing portion 531 can be made from glass, and the substrate 549 holding the sensing means 105 can be made of an epoxy material with glass filler. In a variant, the substrate 549 and the sealing portion 531 can be made of a same material and preferably be a single contiguous part.

As shown on Figure 5, the sensing means 105 can be arranged in the substrate 549 such that the package 127 extends vertically, rather than horizontally, with respect to the central axis 109. Thus, all four of the electrical connection pins 107 can be arranged in a same plane parallel to the central axis 109, and therefore the substrate 549 can be formed advantageously thin and compact. In general, the third embodiment of Figure 5 allows for even more cost efficient manufacturing due to the implementation of a preassembled substrate.

The described embodiments relate to sensor assemblies of the invention having exactly four electrical connection pins. However in variants, when a sensing means is used that requires only three electrical connections, the sensor assembly may instead comprise only three of the electrical connection pins. In further variants, the sensor assembly may instead comprise more than four for example six or eight electrical connection pins. For example, when the sensor assembly comprises eight electrical connection pins, two of the sensing means 105 can be implemented in the sensor assembly.

The described embodiments relate to sensor assemblies of the invention in which the sensing means 105 includes one integrated circuit (IC) sensor chip and one package 127 for the IC sensor chip. However in variants of the invention, the sensing means can also comprise a plurality, for example two or three, IC sensor chips held in a respective plurality of packages. Each one of the plurality of packages is thus arranged on the sensor mounting body and attached to a corresponding number of electrical connection pins that extend through the sensor mounting body, such as the electrical connection pins 107 extending through the sensor mounting body 103.

In other variants of the invention, the sensing means can also comprise, in addition to one or more IC sensor chips, one or more further sensing elements that are not part of an IC sensor chip. For example, the sensing means can comprise the package 127 holding an IC sensor chip, as well as a separate non-IC-based sensing element configured to sense a physical property. For example, the non-IC-based sensing element can be a flexural piezoelectric resonator configured to sense temperature and/or liquid viscosity and/or liquid density, the resonator having two poles respectively attached to respective electrical connection pins extending through the sensor mounting body, such as the electrical connection pins 107 extending through the sensor mounting body 103.

The herein described sensor assemblies 100, 400, 500 and their above-outlined variants realise the invention by providing a sensing solution for harsh environments that offers improved durability, accuracy and manufacturing cost-efficiency.

### Reference signs

100 sensor assembly
101 first environment
103 sensor mounting body
105 sensing means
107, 107a, 107b, electrical connection pin
109 central axis
111 extension direction
113 first side
115 second side
117 intermediary part
119a second environment
119b passageway between first and second environment
119c inner wall
121 externally threaded portion
121b groove for a sealing joint
123 shroud
125 through-hole in the shroud
127 package for an IC sensor chip
129, 129a, 129b passage
131, 131a, 131b sealing portion
133, 133a, 133b pin termination
135 , 135a, 135b contact tab
137 length of a passage
139 diameter of a passage
207 electrical connection pin
233 pin termination
241 bending
245 angle of bending
307 electrical connection pin
333 pin termination
341 step shape
400 sensor assembly
443 support unit
445 support casing
447 support structure
500 sensor assembly
503 sensor mounting body
529 enlarged passage
531 sealing portion
549 substrate

## Claims

1. Sensor assembly for the sensing of a physical property, in particular humidity and/or pressure and/or temperature, in a first environment (101), the sensor assembly (100, 400, 500) comprising a sensor mounting body (103, 503), a sensing means (105) for sensing the physical property, and a plurality of electrical connection pins (107, 107a, 107b, 207, 307),
wherein the sensor mounting body (103, 503) comprises a first side (113) for interfacing the first environment (101), and the sensing means (105) is arranged over the first side (113),
wherein the sensing means (105) comprises an integrated circuit (IC) sensor chip and a package (127) for the IC sensor chip,
wherein each one of the electrical connection pins (107, 107a, 107b, 207, 307) extends through the sensor mounting body (103, 503) from the first side (113) to a second side (115) of the sensor mounting body (103, 503), wherein a passage (129, 129a, 129b, 529) of each one of the electrical connection pins (107, 107a, 107b, 207, 307) through the sensor mounting body (103, 503) is sealed by a sealing portion (131, 131a, 131b, 531) made of a sealing material,
wherein each one of the electrical connection pins (107, 107a, 107b, 207, 307) is directly attached to the package (127) of the sensing means (105).

2. Sensor assembly according to claim 1, wherein the sensing means (105), in particular the package (127), is attached to the sensor mounting body (103, 503) only via the direct attachment to each one of the electrical connection pins (107, 107a, 107b, 207, 307).

3. Sensor assembly according to claim 1, wherein the sensing means (105), in particular the package (127), is further attached to the sensor mounting body (103) via a support structure (447) interposed between the package (127) and the sensor mounting body (103).

4. Sensor assembly according to any one of claims 1 to 3, wherein the first environment (101 is a liquid-immersed environment, such as an oil-immersed environment, or an environment having an ambient pressure of more than 100 kPa, in particular more than 1 MPa, preferably more than 5 MPa, wherein the package (127) is suitable for the first environment (101).

5. Sensor assembly according to any one of claims 1 to 4, wherein the package (127) is a flat no-leads package, preferably a dual flat no-leads (DFN) or a quad flat no-leads (QFN) package.

6. Sensor assembly according to any one of claims 1 to 5, and wherein each one of electrical connection pins (107, 107a, 107b, 207, 307) comprises a pin termination (133, 133a, 133b, 233, 333), in particular a flat pin termination (133, 133a, 133b) or a bent pin termination (233) or a step-shaped pin termination (333), and the package (127), in particular a lead-frame of the package (127), is attached directly to each one of the pin terminations (133, 133a, 133b, 233, 333) such that an electrical connection with the IC sensor chip is realized.

7. Sensor assembly according to any one of claims 1 to 6, wherein each one of the pin terminations (133, 133a, 133b, 233) comprises a soldered portion or a welded portion attached to the package (127), in particular attached to a respective contact tab (135, 135a, 135b) of the package (127).

8. Sensor assembly according to any one of claims 1 to 6, wherein the package (127) is attached to the pin terminations (333) by a form-fitting.

9. Sensor assembly according to any one of claims 1 to 8, wherein the sensor mounting body (103, 503) comprises, in particular is made of, a metal, preferably a stainless steel.

10. Sensor assembly according to any one of claims 1 to 9, wherein the sealing material is a glass or an epoxy.

11. Sensor assembly according to any one of claims 1 to 10, wherein the sensor mounting body (103, 503) is configured to be mounted in a passageway between the first environment (101) and a second environment (119), thereby sealing the passageway, in particular wherein the sensor mounting body (103, 503) comprises an externally threaded portion (121) and the sensor mounting body (103, 503) is configured to be screwed into the passageway via the externally threaded portion (121).

12. Sensor assembly according to any one of claims 1 to 11, wherein the plurality of electrical connection pins (107, 107a, 107b, 207, 307) comprises at least three, in particular at least four, preferably exactly four, electrical connection pins (107, 107a, 107b, 207, 307).

13. Sensor assembly according to any one of claims 1 to 12, wherein the passage of each one of the electrical connection pins (107, 107a, 107b, 207, 307) through the sensor mounting body (103, 503) is sealed by a respective sealing portion (131, 131a, 131b) made of the sealing material.

14. Sensor assembly according to any one of claims 1 to 12, wherein the passage (529) of each one of the electrical connection pins (107, 107a, 107b, 207, 307) through the sensor mounting body (503) is sealed by a single contiguous sealing portion (531) made of the sealing material.

15. Sensor assembly according to claim 14, wherein the sealing portion (531) extends beyond the sensor mounting body (503) to at least partially, preferably entirely, envelop the package (127).
